**Europäisches Patentamt**

**European Patent Office**

**Office européen des brevets**

(11) Publication number: **0 077 770**
**B1**

(12) **EUROPEAN PATENT SPECIFICATION**

(45) Date of publication of patent specification: **25.02.87**

(51) Int. Cl.⁴: **F 16 K 31/02**

(21) Application number: **81901581.9**

(22) Date of filing: **29.12.80**

(86) International application number:
**PCT/US80/01751**

(87) International publication number:
**WO 82/02236 08.07.82 Gazette 82/17**

(54) **PULSE WIDTH MODULATED CONSTANT CURRENT SERVO DRIVER.**

(43) Date of publication of application:
**04.05.83 Bulletin 83/18**

(45) Publication of the grant of the patent:
**25.02.87 Bulletin 87/09**

(84) Designated Contracting States:
**DE FR GB**

(56) References cited:
**DE-A-2 813 752**
**FR-A-2 446 936**
**US-A-3 455 536**
**US-A-3 795 826**
**US-A-4 148 090**
**US-A-4 214 290**

**IBM TECHNICAL DISCLOSURE BULLETIN, vol. 21, no. 3, August 1978, NEW YORK (US), T.L. WELLS: "Pulse-width modulation of magnets", pages 1107-1108**

(73) Proprietor: **CATERPILLAR INC.**
**100 Northeast Adams Street**
**Peoria Illinois 61629-6490 (US)**

(72) Inventor: **PHELPS, Weldon L.**
**12140 Whispering Woods Drive**
**Dunlap, IL 61525 (US)**

(74) Representative: **Skone James, Robert Edmund et al**
**GILL JENNINGS & EVERY 53-64 Chancery Lane London WC2A 1HN (GB)**

Courier Press, Leamington Spa, England.

## Description

This invention generally relates to servo controlled hydraulic valves of the type operated by an electrically responsive coil, and deals more particularly with a method and apparatus for consistently controlling valve response irrespective of variations in power supply voltage and coil resistance.

Control systems often employ servo controlled hydraulic valves to control hydraulic line pressure. For example, one application of a servo controlled hydraulic valve is for controlling differentially driven wheel slip in vehicles. Wheel slip is controlled by selectively activating the vehicle's hydraulically operated brakes in a manner which directs braking power to the slipping wheel or wheels. An electrical control system senses wheel slippage and produces pulse width modulated control signals whose duty factors are proportional to the desired response of a hydraulic proportioning valve. The proportioning valve is in turn connected to a control valve which controls the pressure of hydraulic fluid applied to the brakes.

Servo controlled valves of the type mentioned above include an electrically responsive coil for controlling an output of the valve. These coils are selectively energised with a suitable voltage source for time periods corresponding to the periods of the control signals. As will be discussed more fully hereinafter, substantial variations in valve response are experienced as a result of changes in both power supply voltage and the resistance of the coil due to temperature variations. In some cases, valve response, which may be measured in terms of the magnitude of hydraulic output pressure from the valve, may vary considerably. This pressure variation significantly reduces the accuracy of a control system employing servo valves and may prevent their use in some applications.

An example of a known control system of this type is shown in US—A—3,455,536. This system suffers also from the disadvantages mentioned above and in particular problems caused by variations in the voltage delivered by the voltage source.

US—A—4,214,290 discloses a control circuit for controlling the current supply from a D.C. source to the actuating coil of an electromagnetically operated contactor. The main voltage across the coil is controlled by controlling the mark to space ratio with which the coil is connected and disconnected from the source. This arrangement suffers from a problem that variations in resistance of the actuator coil will result in changing current level.

The present invention is directed to overcoming the problems associated with the prior art discussed above and provides a significantly improved pulse width modulated servo driver which affords consistently repeatable valve response.

In accordance with one aspect of the present invention, hydraulic servo valve control apparatus comprises a hydraulic servo valve having a coil operated output responsive to control signals for producing hydraulic output pressure respectively proportional to the duty factors of the control signals, and means for producing the control signals; and is characterised by constant current generating means for supplying a plurality of current pulses of substantially constant magnitude to the coil in response to the control signals; and by switch means receiving a variable duty cycle control input when coupled between the means for producing the control signals and the constant current generating means, the switch means being responsive to the control signals in use to cause current pulses of constant magnitude but variable duration to be applied to the coil.

Constant current generating means is employed in order consistently to control valve response irrespective of variations in power supply voltage and coil resistance.

A voltage regulator circuit may be included to regulate the supply voltage to the constant current generating means in order to reduce variations in the coil current at small pulse widths.

In accordance with a second aspect of the present invention, a method of operating a servo controlled hydraulic valve having a coil operated output for producing preselected hydraulic output pressures, which substantially eliminates variance in the output pressures due to changes in the magnitude of a supply voltage or changes in the resistance of the coil, comprises the steps of: producing control signals having duty factors respectively proportional to the magnitude of the preselected hydraulic pressure; generating a plurality of current pulses in response to the control signals; and, delivering the current pulses to the coil, and is characterised in that the current pulses are of substantially constant magnitude and variable duration.

Preferably the current pulses are delivered to the coil by sensing the control signals; operating a switch in response to the sensed control signals; and, controlling the operation of a constant current source in response to operation of the switch. Additionally, the method may further include the steps of generating a supply of electrical power; regulating the voltage of the power supply; and delivering the voltage regulated supply of power to the constant current source.

An example of a method and apparatus in accordance with the present invention will now be described and contrasted with a known example with reference to the accompanying drawings, in which:—

Figure 1 is a block diagram of a known system for controlling a hydraulic valve;

Figure 2 is a combined schematic and block diagram of the servo driver employed in the system shown in Figure 1;

Figure 3 is a waveform diagram of the voltage input to the coil of the servo driver shown in Figure 2, as well as the pressure output from the valve;

Figure 4 is a block diagram of a system for controlling a hydraulic valve including a pulse width modulated constant current, servo driver which forms the preferred embodiment of the present invention;

Figure 5 is a combined block and schematic diagram of the servo driver employed in the system shown in Figure 4;

Figure 6 is a waveform diagram showing the current input and pressure output respectively, of the servo driver and valve shown in Figure 5; and,

Figure 7 is a detailed schematic diagram of the servo driver shown in Figure 5.

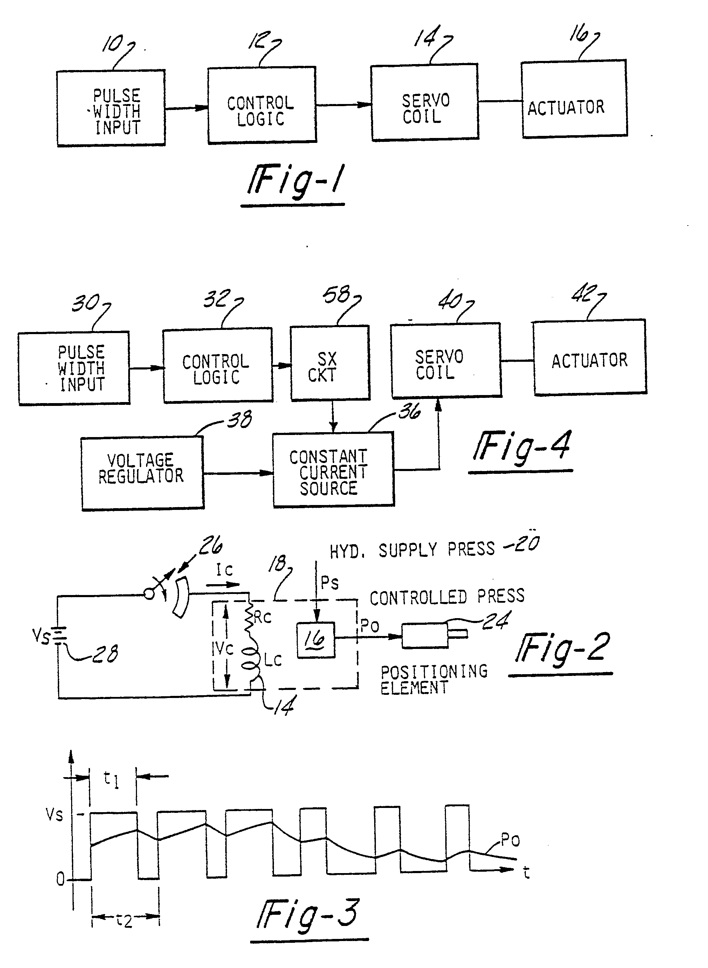

The import of the present invention may best be understood by a thorough understanding of known servo drivers for hydraulic valves, and in this connection reference is made to Figures 1—3. A pulse width input 10 typically includes an oscillator (not shown) operating in combination with a duty cycle generator (not shown) which produces a width modulated pulse train at a preselected frequency. This pulse train is selectively delivered by control logic 12, which may comprise a microprocessor based system, to the coil 14 of a servo valve 18. Coil 14, having an inductance of $L_c$ and a resistance of $R_c$ is effectively connected in series with a suitable source of voltage $V_s$, designated by the numeral 28, as well as the control logic 12, which, for purposes of simplicity, has been indicated as a rotary switch 26 in Figure 2.

Switch 26 effectively couples the voltage source 28 with the servo valve 18, thereby applying a voltage $V_c$ across the coil 14. The duration for which the voltage $V_c$ is present across the servo valve 18 corresponds to the width of the pulse produced by switch 26. The voltage $V_c$ applied to the valve 18 by switch 26 causes coil 14 to operate a valve actuator 16 in proportion to the duty factors of the voltage pulses $V_c$ applied to the coil 14. Valve actuator 16 has an input coupled to a supply of hydraulic pressure $P_s$ designated by the numeral 20 and an output which delivers controlled hydraulic pressure $P_o$ to a mechanical positioning element 24. Positioning element 24, in turn, may be employed to operate a proportioning valve (not shown) or the like. Thus, it may be appreciated that the output pressure $P_o$ is directly proportional to the width or period of the voltage pulses generated by switch 26.

The relationship between the pulse width modulated signals developed by the arrangements shown in Figures 1 and 2 and the output pressure $P_o$ of servo valve 18 can be better understood by reference to Figure 3, wherein the duty factor of the pulse width modulated signals, indicated by $t_1/t_2$ is less than the period $t_2$ of such signal. When the duty factor $t_1/t_2$ of the pulse width modulated signal is shorter in time than the time constant of the servo valve 18, the output pressure $P_o$ is averaged as is apparent from the waveform and is proportional to the average current flow through coil 14, i.e.,

$$P_o = KI_{c(avg)} \qquad (1)$$

The average current $I_{c(avg)}$ is also a function of the duty factor $t_1/t_2$, the voltage $V_c$ applied across the coil 14, and the resistance $R_c$ of the coil 14. Thus,

$$I_{c(avg)} = D_F \frac{V_c}{R_c} \qquad (2)$$

Where:

$$D_F = \frac{t_1}{t_2}$$

Combining equations (1) and (2) yields:

$$P_o = KD_F \frac{V_c}{R_c} \qquad (3)$$

Clearly then, the magnitude of the output pressure $P_o$ is directly dependent upon the magnitude of the voltage $V_c$ as well as the resistance $R_c$ of the coil 14.

Hydraulic servo valves are often employed in applications where supply voltage and ambient temperature may vary widely. Considering the foregoing equations, a substantial change in the magnitude of supply voltage $V_s$ results in a proportionate change in the output pressure $P_o$. Additionally, changes in the ambient temperature produce a direct change in the resistance $R_c$ of the coil 14. Again, variance of the resistance $R_c$ produces a proportional change in the output pressure $P_o$. These changes in supply voltage $V_s$ and coil resistance $R_c$ can result in a variation of the output pressure $P_o$ which is as much as $\pm 50\%$ of the maximum output pressure $P_o$.

Referring generally now to Figures 4—7, the present invention provides a pulse width modulated, constant current, servo driver which eliminates variations in the output pressure $P_o$ due to changes in power supply voltage or temperature, thus assuring a constant proportional relationship between the output pressure $P_o$ and the pulse width of the control signal. As seen in Figure 4, the servo driver of the present invention is adapted for use with a conventional pulse width input 30 and control logic 32 which are similar in construction to those previousely discussed. The width modulated pulse train output from control logic 32 is delivered to the input of a switching circuit 58. The switching circuit 58 provides a means for controlling the output of a constant current source 36 and is operative to deliver constant current pulses, having duty factors respectively corresponding to the signals output by control logic 32, from the current source 36 to the servo coil 40 of a servo valve 48. A voltage regulator 38 provides a constant voltage input to the current source 36. Coil 40 is operative to energize a valve actuator 42, which in turn controls a mechanical positioning element 46.

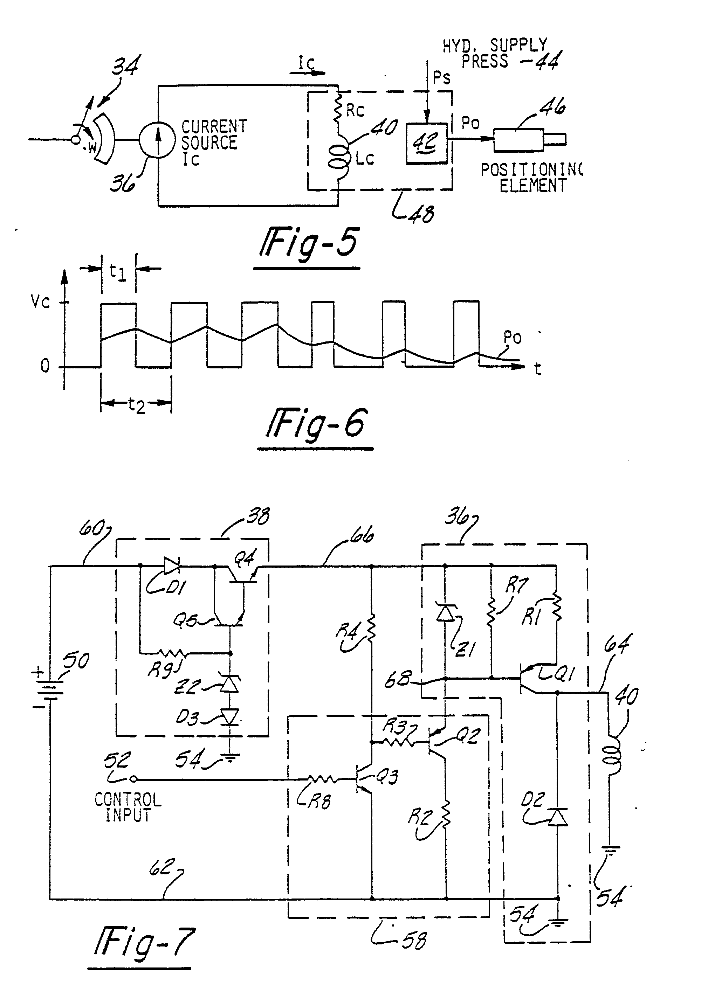

Turning attention particularly to Figures 5 and 6, the servo coil 40 includes an inductance $L_c$ and a resistance $R_c$ connected in series with the constant current source 36 which delivers current $I_c$ through the coil 40. The ouptut of the current source 36 is controlled by the switching circuit 34 which effectively gates the current $I_c$ to produce a series of constant current pulses having duty factors $t_1/t_2$ equivalent to those output by control logic 32.

Energization of the valve actuator 42 during each current pulse is proportional to the duty factor $t_1/t_2$ of the current pulse flowing through coil 40, and results in the delivery of hydraulic fluid from a hydraulic pressure supply 44 to the positioning element 46 at a proportionate output pressure $P_o$.

From Figure 6, it can seen that the average current $I_{c(avg)}$ flowing through coil 40 is given by the formula:

$$I_{c(avg)} = \frac{t_1}{t_2} I_c = D_F I_c \qquad (4)$$

Substituting equation (4) into equation (1) gives:

$$P_o = K D_F I_c$$

Thus, by applying constant current pulses to the servo valve 48, the output pressure $P_o$ becomes independent of variations in the supply voltage or coil resistance $R_c$.

Referring now to Figure 7, the servo driver of the present invention includes a suitable power source such as the battery 50 respectively coupled by lines 60 and 62 to the input of a voltage regulator, generally indicated within the broken line 38, and ground 54. The voltage regulator 38 comprises a diode D1 coupled between line 60 and the collectors of a pair of Darlington connected transistors Q4 and Q5. The base of transistor Q5 is connected to line 60 through resistor R9 and to ground 54 through zener diode Z2 and diode D3. A regulated supply of voltage is output from regulator 38 to the switching circuit 58 via resistor R4 as well as to the constant current source, generally indicated within the broken line 36, via line 66.

Pulse width modulated control signals derived from control logic 32 (Figure 4) are delivered to switching circuit 58 via control input 52. Switching circuit 58 includes an input transistor Q3 and an output transistor Q2. Transistor Q3 has the base thereof coupled through resistor R8 to control input 52 while the collector to emitter path thereof is connected between the output of voltage regulator 38 through resistor R4 and ground 54. The base of transistor Q2 is connected through resistor R3 to the collector of transistor Q3. The collector to emitter path of transistor Q2 is connected between ground 54 through resistor R2 and terminal 68 which forms a switching input to the constant current source 36.

The constant current source 36 includes a transistor Q1 whose base is connected to terminal 68 as well as to the output of the voltage regulator 38 through resistor R7 and zener diode Z1. The emitter of transistor Q1 is connected via resistor R1 to line 66. The collector of transistor Q1 is coupled in series with diode D2 to ground 54. The collector of transistor Q1 also forms the output of current source 36 and is coupled by line 64 to ground 54 through the coil 40.

The switching circuit 58 switches or "gates" the output of current source 36 on line 64 between on and off states in accordance with leading and trailing edges of the pulse width modulated control signals received at control input 52. The leading edge of a pulse received on control input 52 turns on transistor Q3, which in turn renders transistor Q2 conductive. When transistor Q2 is on, transistor Q1 turns on and the voltage developed across zener diode Z1 is equal to the sum of the current $I_c$ flowing through line 64 times the resistance $R_1$ plus the voltage drop between the base and emitter of transistor Q1, i.e.,

$$I_c R_1 + V_{BEQ1} = V_{Z1}$$

or,

$$I_c = \frac{V_{Z1} - V_{BEQ1}}{R_1}$$

Since the voltage developed across zener diode Z1 as well as the base to emitter voltage of transistor Q1 each remains constant and, further, since the value of resistor R1 does not change, it can be readily appreciated that the current pulse $I_c$ remains constant in magnitude, irrespective of variations in the resistance of the coil 40, or the voltage of the power supply 50, so long as the voltage of the power supply 50 remains in a range capable of being regulated by voltage regulator 38.

At the end of the control pulse, transistors Q2 and Q3 are turned off, which in turn shuts off transistor Q1 to terminate the flow of current $I_c$.

The voltage regulator 38 is employed in connection with the preferred form of the invention to reduce variation in the current $I_c$ flowing through coil 40 in response to control pulses having especially short periods, since the inductance of the coil 40 affects the rate that current $I_c$ rises following the leading edge of the control pulse.

From the foregoing, it can be appreciated that the present invention provides a novel method of operating a servo controlled hydraulic valve which substantially eliminates variance in the output pressure of the valve due to changes in the magnitude of voltage supplied to the coil or changes in the resistance of the coil. The method includes the steps of: producing a plurality of control signals which have duty factors respectively proportionate to preselected hydraulic pressures; generating a plurality of current pulses of substantially constant magnitude using the control signals; and, delivering the current pulses to the coil. Current pulses are delivered to the coil by sensing the control signals, operating a switching circuit using the sensed control signals, and then controlling the operation of the constant current source using the switching circuit.

The constant current servo driver of the present invention is well adapted for a number of applications. However, the servo driver of the present invention is particularly well suited for those applications where wide fluctuations in power supply voltage and temperature may be experienced, as in vehicles for example. The present servo driver is compatible with various types of control circuit which produce pulse train signals wherein the duty factors of the signals are proportional to preselected servo responses.

**Claims**

1. Hydraulic servo valve control apparatus comprising a hydraulic servo valve (48) having a coil (40) operated output (42) responsive to control signals for producing hydraulic output pressure $(P_o)$ respectively proportional to the duty factor $(t_1/t_2)$ of the control signals, and means (30, 32) for producing the control signals characterised by constant current generating means (36) for supplying a plurality of current pulses of substantially constant magnitude to the coil (40) in response to the control signals; and by switch means (58) receiving a variable duty cycle control input when coupled between the means (30, 32) for producing the control signals and the constant current generating means, the switch means being responsive to the control signals in use to cause current pulses of constant magnitude but variable duration to be applied to the coil (40).

2. Apparatus according to claim 1, wherein the constant current generating means (36) includes an electrical transistor (Q1).

3. Apparatus according to claim 2, wherein a base of the electrical transistor (Q1) is connected to the switch means (58), and wherein the constant current generating means further includes a diode (Z1) and a resistor (R1) respectively connected with the base and an emitter of the transistor (Q1).

4. Apparatus according to any of the preceding claims, including a DC voltage supply (50), and regulator means (38) for providing a regulated voltage from the voltage supply (50) to the constant current generating (36).

5. A method of operating a servo controlled hydraulic valve (48) having a coil (40) operated output for producing preselected hydraulic output pressures $(P_o)$, which substantially eliminates variance in the output pressures $(P_o)$ due to changes in the magnitude of a supply voltage $(V_c)$ or changes in the resistance $(R_c)$ of the coil (40), comprising the steps of: producing control signals having duty factors $(t_1/t_2)$ respectively proportional to the magnitude of the preselected hydraulic pressure $(P_o)$; generating a plurality of current pulses in response to the control signals; and, delivering the current pulses to the coil (40), characterised in that the current pulses are of substantially constant magnitude and variable duration.

6. A method according to claim 5, wherein the step of delivering the current pulses to the coil (40) includes sensing the control signals; operating a switch (Q2, Q3) in response to the sensed control signals; and controlling the operation of a constant current source (36) in response to operation of the switch (Q2, Q2).

7. A method according to claim 6, including the steps of generating a supply (50) of electrical power; regulating the voltage of the power supply (50); and delivering the voltage regulated supply of power to the constant current source (36).

**Patentansprüche**

1. Hydraulische Servoventilsteuervorrichtung, die folgendes aufweist:

ein hydraulisches Servoventil (48) mit einer von einer Spule (40) betätigten Ausgangsgröße (42), ansprechend auf Steuersignale zur Erzeugung eines hydraulischen Ausgangsdrucks $(P_o)$, jeweils proportional zu den Tastverhältnissen $(t_1/t_2)$ der Steuersignale, und Mittel (30, 32) zur Erzeugung der Steuersignale,

gekennzeichnet durch

Konstantstromerzeugungsmittel (36) zur Lieferung einer Vielzahl von Stromimpulsen von im wesentlichen konstanter Größe an die Spule (40) infolge der Steuersignale,

und ferner gekennzeichnet durch Schaltmittel (58), die eine variable Tastverhältnisteuereingangsgröße empfangen, wenn sie gekuppelt sind zwischen die Mittel (30, 32) zue Erzeugung der Steuersignale und die Konstantstromerzeugungsmittel, wobei die Schaltmittel auf die Steuersignale im Gebrauch ansprechen, um das Anlegen von Stromipulsen konstanter Größe, aber variabler Dauer an die Spule (40) zu bewirken.

2. Vorrichtung nach Anspruch 1, wobei die Konstantstromerzeugungsmittel (36) einen elektrischen Transistor (Q1) aufweisen.

3. Vorrichtung nach Anspruch 2, wobei eine Basis des elektrischen Transistors (Q1) mit den Schaltmitteln (58) verbunden ist, und wobei die Konstantstromerzeugungsmitte 41 ferner einer Diode (Z1) und einen Widerstand (R1) aufweisen, die mit der Basis bzw. einem Emitter des Transistors (Q1) verbunden sind.

4. Vorrichtung nach einem der vorhergehenden Ansprüche, mit einer Gleichspannungsversorgung (50) und Regulatormitteln (38) zum Vorsehen einer regulierten Spannung von der Spannungsversorgung (50) für die Konstantstromerzeugungsmittel (36).

5. Verfahren zum Betrieb einers servogesteuerten Hydraulikventils (48) mit einem durch eine Spule (40) betätigten Ausgang für die Erzeugung vorgewählter hydraulischer Ausgangsdrücke ($P_o$), die im wesentlichen die Veränderung der Ausgangsdrücke ($P_o$) infolge von Änderungen der Größe der Versorgungs-spannung ($V_c$) oder Änderungen im Widerstandswert ($R_c$) der Spule (40) eliminiert, wobei die folgenden Schritte vorgesehen sind:

Erzeugung von Steuersignalen mit Tastverhält-nissen ($t_1/t_2$) jeweils proportional zur Größe des vorgewählten Hydraulikdrucks ($P_o$);

Erzeugung einer Vielzahl von Stromimpulsen infolge der Steuersignale und

Lieferung der Steuerimpulse an die Spule (40), dadurch gekennzeichnet, daß die Stromimpulse im wesentlichen konstante Größe und veränderbare Dauer besitzen.

6. Verfahren nach Anspruch 5, wobei der Schritt der Lieferung der Stromimpulse an die Spule (40) das Abfühlen der Steuersignale umfaßt, die Betätigung eines Schalters (Q2, Q3) infolge der abgefühlten Steuersignale, und die Steuerung des Betriebs einer Konstantstromquelle (36) infolge des Betriebs des Schalters (Q2, Q3).

7. Verfahren nach Anspruch 6, mit den Schritten der Erzeugung einer Versorgung (50) von elektrischer Leistung, Regulierung der Spannung der Leistungsversorgung (50) und Lieferung der spannungsregulierten Versorgungsleistung an die Konstantstromquelle (36).

## Revendications

1. Appareil de commande à servo-valve hydraulique, comprenant une servo-valve hydraulique (48) comportant une sortie (42) actionnée par une bobine (40) en réponse à des signaux de commande, de manière à produire une pression de sortie hydraulique ($P_o$) respectivement proportionnelle aux coefficients d'utilisation ($t_1/t_2$) des signaux de commande, et des moyens (30, 32) servant à produire les signaux de commande, caractérisé par des moyens de génération d'un courant constant (36), servant à fournir une multiplicité d'impulsions de courant possédant une amplitude sensiblement constante à la bobine (40) en réponse aux signaux de commande; et par des moyens de commutation (58) recevant un signal d'entrée variable de commande du cycle d'utilisation et branchés entre les moyens (30, 32) servant à produire les signaux de commande et les moyens de génération d'un courant constant, les moyens de commutation étant sensibles aux signaux de commande utilisés, de manière à provoquer l'application, à la bobine (40), des impulsions de courant d'amplitude constante, mais de durée variable.

2. Appareil selon la revendication 1, dans lequel les moyens de génération du courant constant (36) comprennent un transistor électrique (Q1).

3. Appareil selon la revendication 2, dans lequel une base du transistor électrique (Q1) est raccordée aux moyens de commutation (58), et dans lequel les moyens de génération du courant constant comprennent en outre une diode (Z1) et une résistance (R1) raccordées respectivement à la base et à un émetteur du transistor (Q1).

4. Appareil selon l'une quelconque des revendications précédentes, comprenant une alimentation de tension continue (50) et des moyens régulateurs (38) pour fournir une tension réglée, aux moyens de génération du courant constant (36) à partir de l'alimentation de tension (50).

5. Procédé d'utilisation d'une servo-valve à commande hydraulique (48) comportant une sortie actionnée par une bobine (40), pour produire des pressions hydrauliques de sortie présélectionnées ($P_o$), et qui élimine pour l'essentiel la variation des pressions de sortie ($P_o$), due à des variations de l'amplitude d'une tension d'alimentation ($V_c$) ou de variations de la résistance ($R_c$) de la bobine (40), incluant les étapes consistant: à produire des signaux de commande dont les coefficients d'utilisation ($t_1/t_2$) sont respectivement proportionnels à l'amplitude de la pression hydraulique présélectionnée ($P_o$); à générer une multiplicité d'impulsions de courant en réponse aux signaux de commande; et à fournir les impulsions de courant à la bobine (40), caractérisé en ce que les impulsions de courant possédent une amplitude sensiblement constante et une durée variable.

6. Procédé selon la revendication 5, selon lequel l'étape de fourniture des impulsions de courant à la bobine (40) inclut la détection des signaux de commande; l'actionnement d'un commutateur (Q2, Q3) en réponse aux signaux de commande détectés; et la commande de la mise en service d'une source de courant constant (36) en réponse à l'actionnement du commutateur (Q2, Q2).

7. Procédé selon la revendication 6, incluant les étapes consistant à produire une alimentation (50) en énergie électrique, à régler la tension de l'alimentation en énergie (50), et à envoyer l'alimentation en énergie, réglée en tension, à la source de courant constant (36).

Fig-1

Fig-4

Fig-2

Fig-3

1

*Fig-5*

*Fig-6*

*Fig-7*